# EUROPÄISCHE PATENTSCHRIFT

(11) **EP 2 038 129 B1**
(45) Veröffentlichungstag und Bekanntmachung des Hinweises auf die Patenterteilung: **04.11.2015**
(21) Anmeldenummer: 07728544.3
(22) Anmeldetag: 26.04.2007
(51) Int. Cl.: B60C 9/20

(54) **FAHRZEUGLUFTREIFEN MIT VIERLAGIGEM GÜRTEL SOWIE GÜRTELKANTENSTREIFEN**
PNEUMATIC VEHICLE TYRE WITH FOUR-PLY BELT AND BELT EDGE STRIP
PNEUMATIQUES POUR VEHICULE AVEC NAPPE D'ARMATURE A QUATRE COUCHES ET BANDES DE BORDURE DE NAPPE D'ARMATURE

(30) Priorität: 29.06.2006 DE 102006029898
(43) Veröffentlichungstag der Anmeldung: 25.03.2009
(73) Patentinhaber: Continental Reifen Deutschland GmbH, 30165 Hannover (DE)
(72) Erfinder: CARL, Wilfried, 12159 Berlin (DE); HÄRTWIG, Andreas, 30419 Hannover (DE); MEINERS, Christian, 30419 Hannover (DE)
(74) Vertreter: Finger, Karsten
(86) Internationale Anmeldenummer: PCT/EP2007/054089
(87) Internationale Veröffentlichungsnummer: WO 2008/000536

(56) Entgegenhaltungen:
- EP-A1- 0 572 906
- EP-A1- 0 785 096
- DE-A1- 2 800 308
- FR-A- 1 437 569
- GB-A- 1 215 820
- US-A- 5 111 864

## Beschreibung

Die Erfindung betrifft einen Fahrzeugluftreifen in Radialbauart für Lastkraftwagen mit einem vierlagigen Gürtel, wobei jede Gürtellage als Festigkeitsträger Stahlkorde enthält, die in jeder Gürtellage parallel zueinander verlaufen, wobei, beginnend bei der ersten radial innersten Gürtellage, der Winkel, den die Stahlkorde in der ersten Gürtellage mit der Umfangsrichtung einschließen, zwischen 50° und 65° beträgt und die Winkel, die die Stahlkorde in den weiteren Gürtellagen mit der Umfangsrichtung einschließen, jeweils zwischen 10° und 30° betragen, *und wobei zwischen die Randabschnitte der zweiten Gürtellage und der dritten Gürtellage ein Gürtelpolster hinein ragt, welcher sich schulterseitig über den Rand der zweiten Gürtellage hinaus erstreckt.*

Bei LKW-Reifen mit einem niedrigen Querschnitt, insbesondere mit einer Breite größer als 350 mm und einem Verhältnis Querschnittshöhe zu Querschnittsbreite ≤ 0,5, wird, insbesondere wenn die Reifen auf angetriebenen Achsen eingesetzt werden, oft ein ungleichmäßiger Laufstreifenabrieb festgestellt, sodass die mögliche Lebensdauer des Reifens im Betrieb nicht erreicht wird. Um den Laufstreifenabrieb zu vergleichsmäßigen, ist es bekannt, eine der vorhandenen Stahlkordlagen oder eine zusätzliche Stahlkordlage im Gürtel mit in Umfangsrichtung orientierten Stahlkorden zu versehen. Dabei hat sich heraus gestellt, dass sich durch diese Maßnahme vor Allem der Schulterabrieb von Antriebsachsreifen nicht oder nur unwesentlich verbessern lässt.

Aus der FR 1 437 569 A ist ein Fahrzeugluftreifen in Radialbauart für Lastkraftwagen bekannt, welcher schulterseitig jeweils zwei Gürtelkantenstreifen aus gummierten und in jedem Streifen parallel verlaufenden Stahlkorden aufweist. Seitlich des Gürtelverbandes verlaufen die Gürtelkantenstreifen in Kontakt miteinander, der eine Gürtelkantenstreifen überdeckt den Randabschnitt der radial äußersten Gürtellage, der zweite Gürtelkantenstreifen verläuft ein Stück radial innerhalb der ersten, radial innersten Gürtellage. Aus der US 5 111 864 A ist ein LKW-Reifen mit einem beispielsweise vierlagigen Gürtel bekannt, wobei die einzelnen Gürtellagen randseitig mit schmalen Schutzstreifen mit Festigkeitsträgern aus Nylon bedeckt sind. Diese Schutzstreifen sollen die Gürtelhaltbarkeit verbessern, insbesondere soll das Ablösen der Gürtelkanten vermieden werden.

Der Erfindung liegt die Aufgabe zugrunde, bei einem LKW-Reifen, insbesondere einem Reifen mit einem Verhältnis Querschnittshöhe zu Querschnittsbreite ≤ 0,5 eine Vergleichmäßigung des Laufstreilenabriebs über den Querschnitt des Reifens zu erzielen, vor Allem bei einem Einsatz der Reifen auf Antriebsachsen,

Gelöst wird die gestellte Aufgabe erfindungsgemäß dadurch, dass schulterseitig jeweils zumindest zwei aufeinander liegende Gürtelkantenstreifen aus gummiertem und in jedem Streifen parallel verlaufenden Stahlkorden angeordnet sind, *wobei der radial innere Streifen in Kontakt mit dem Randabschnitt der dritten Gürtellage steht,* welche Streifen, in axialer Richtung betrachtet, die Kanten der ersten drei Gürtellagen überdecken *und zur Gürtelmitte zu bis knapp zu den Seitenkanten der radial äußersten Gürtellage reichen,* wobei die Stahlkorde in dem einen Streifen zu den Stahlkorden in dem anderen Streifen gekreuzt verlaufen und die Stahlkorde mit der Umfangsrichtung jeweils einen spitzen Winkel einschließen.

Eine erfindungsgemäße Überdeckung der Gürtelkanten der ersten drei Gürtellagen versteift den Gürtelverband schulterseitig und führt zur erwünschten Vergleichmäßigung des Abriebsbildes insbesondere von LKW-Niederquerschnittsreifen auf Antriebsachsen.

Auf die erzielbare Versteifung des Gürtelverbandes in den Schulterbereichen wirkt es sich vorteilhaft aus, wenn der Winkel, den die beiden Kantenstreifen mit der Umfangsrichtung einschließen, zwischen 10° und 30° beträgt.

Auch die Orientierung der Stahlkorde in den beiden Streifen relativ zur Umfangsrichtung kann, je nach Ausführung der Streifen und je nach Ausführung des Gürtelpakets des Reifens Einfluss auf die Versteifung des Gürtelverbandes nehmen. Je nach Ausführung des Gürtels kann es dabei von Vorteil sein, wenn die Orientierung der Stahlkorde in den Streifen, beginnend beim radial inneren Streifen, der Abfolge links-rechts oder der Abfolge rechts-links folgt.

Je nach Einsatzzweck und Ausführung der Reifen kann es günstig sein, dass die Orientierung der Stahlkorde in den Streifen in der einen Schulter mit jener der Streifen in anderen Schulter übereinstimmt oder dass die Orientierung gegengleich erfolgt.

Bei der bevorzugten Ausführungsform der Erfindung stimmt die Breite der beiden Streifen überein. Diese Maßnahme ist für eine definierte Versteifung des Gürtelverbandes in den

Schulterbereichen von Vorteil. Die Breite der Streifen wird dabei von 5 % bis 20 % der Breite der breitesten Gürtellage gewählt.

Weitere Merkmale, Vorteile und Einzelheiten der Erfindung werden anhand der Zeichnung, die ein Ausführungsbeispiel darstellt, näher beschrieben. Dabei zeigen
Fig. 1 einen Teilquerschnitt durch die eine Hälfte eines Fahrzeugluftreifens im Bereich des Gürtels und des Laufstreifens und
Fig. 2 eine Draufsicht auf den Gürtel aus Fig. 1.

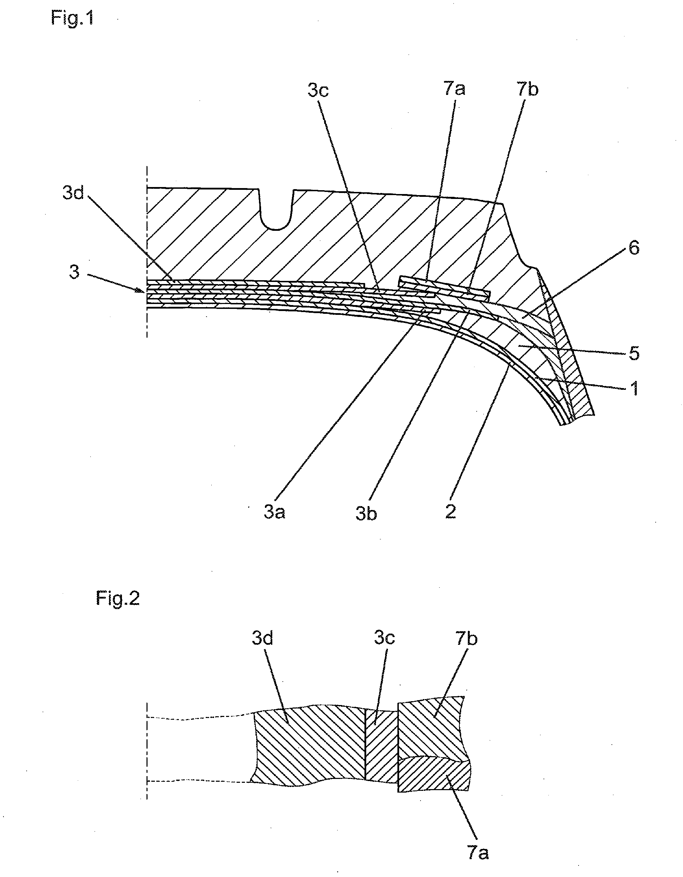

Fig. 1 zeigt einen Querschnitt durch den Laufstreifen und den Gürtelbereich eines Fahrzeugluftreifens in Radialbauart für Lastkraftwagen in einer üblichen Standardkonstruktion mit einer Karkasse 1 mit Stahlkorden als Festigkeitsträgern, einer luftdichten Innenschicht 2, einem mehrlagigen Gürtel 3 und einem profilierten Laufstreifen 4.

Der Gürtel 3 weist vier Gürtellagen 3a, 3b, 3c, 3d auf. Die vierte, radial äußerste Gürtellage 3d besitzt die geringste Breite von allen Lagen. Die zweite Gürtellage 3b ist die breiteste Gürtellage von allen Gürtellagen und überdeckt komplett die erste Gürtellage 3a. Die erste und dritte Gürtellage, 3a und 3c, liegen in der Breite zwischen der ersten und vierten Gürtellage, 3b und 3d. Sämtliche Gürtellagen 3a, 3b, 3c und 3d bestehen aus in eine Gummimischung, der Gürtelgummierung, eingebetteten Festigkeitsträgern, insbesondere Stahlkord, beispielsweise Stahlkord der Konstruktion 3 x 0,2 mm + 6 x 0,35 mm, wobei auch Stahlkorde anderer Konstruktionen eingesetzt werden können. In jeder Gürtellage 3a, 3b, 3c, 3d verlaufen die Stahlkorde zueinander parallel. Schulterseitig ist jeweils zwischen der Karkasse 1 und den Randabschnitten der ersten und zweiten Gürtellage 3a, 3b ein Schulterpolster 5 angeordnet, zwischen die Randabschnitte der zweiten Gürtellage 3b und der dritten Gürtellage 3c ragt ein Gürtelpolster 6 hinein, welcher sich schulterseitig über den Rand der zweiten Gürtellage 3b hinaus erstreckt.

Der dargestellte Gürtel ist ein sogenannter Dreiecksgürtel, bei dem die Stahlkorde in der ersten, radial innersten Gürtellage 3a einen Winkel zwischen 50° bis 65° mit der Umfangsrichtung einschließen. Die Stahlkorde in den weiteren Gürtellagen 3b, 3c und 3d schließen mit der Umfangsrichtung jeweils einen Winkel zwischen 10° und 30° ein. Typische Größen für die Winkel der Stahlkorde sind 50° in der ersten Gürtellage 3a und jeweils 18° in den anderen Gürtellagen 3b, 3c und 3d.

Bei einem erfindungsgemäß ausgeführten Reifen sind schulterseitig und aufeinander liegend jeweils zwei Gürtelkantenstreifen 7a, 7b vorgesehen, wobei der radial innere Streifen 7a in Kontakt mit dem Randabschnitt der dritten Gürtellage 3c steht. Bei der dargestellten Ausführungsform sind die Kantenstreifen 7a, 7b gleich breit ausgeführt. Die Kantenstreifen 7a, 7b reichen schulterseitig soweit, dass zumindest die Außenkante der breitesten Gürtellage 3b, in axialer Richtung betrachtet, überdeckt wird. Zur Gürtelmitte zu enden die Kantenstreifen 7a, 7b in einem Abstand vor der obersten Gürtellage 3d.

Die Kantenstreifen 7a, 7b bestehen aus gummierten Stahlkorden, wobei die Stahlkorde in jeder der Kantenstreifen 7a, 7b parallel zueinander verlaufen und wobei die Stahlkorde im Streifen 7a zu den Stahlkorden im Streifen 7b gekreuzt angeordnet sind. Der Winkel, den die Stahlkorde in den Streifen 7a, 7b mit der Umfangsrichtung einschließen, wird zwischen 10° und 30° gewählt. Dabei kann, bezogen auf die Umfangsrichtung des Reifens, die Orientierung der Stahlkorde in den Streifen 7a, 7b derart erfolgen, dass, ausgehend vom Streifen 7a eine Abfolge der Orientierung gemäß rechts-links oder gemäß links-rechts vorliegt. Diese Orientierung kann für die in der rechten und die in der linken Reifenschulter angeordneten Streifenpaare übereinstimmen oder gegengleich sein. Die Breite der breiten Streifen 7a, 7b beträgt zwischen 5 % und 20 % der Breite der breitesten Gürtellage 3b. Die beiden Streifen 7a, 7b können abweichend von der dargestellten Ausführung auch unterschiedlich breit ausgeführt sein.

Besonders vorteilhaft ist die Erfindung bei auf Antriebsachsen eingesetzten LKW-Reifen mit einem niedrigen Querschnitt, insbesondere bei Reifen mit einer Breite größer als 350 mm und einem Verhältnis der Querschnittshöhe zur Querschnittsbreite ≤ 0,5. Gerade auf Antriebsachsen wirken auf die Reifen im Betrieb Antriebs- und Bremsmomente, die oft Ursache für einen ungleichmäßigen Abrieb sind. Die Gürtelkanten 7a, 7b versteifen den Gürtelverband in Umfangsrichtung, wodurch sich das Abriebsbild der Reifen deutlich verbessert.

## Patentansprüche

1. Fahrzeugluftreifen in Radialbauart für Lastkraftwagen mit einem vierlagigen Gürtel (3a, 3b, 3c, 3d), wobei jede Gürtellage (3a, 3b, 3c, 3d) als Festigkeitsträger Stahlkorde enthält, die in jeder Gürtellage (3a, 3b, 3c, 3d) parallel zueinander verlaufen, wobei der Winkel, den die Stahlkorde in der ersten Gürtellage (3a) mit der Umfangsrichtung einschließen, zwischen 50° und 65° beträgt und die Winkel, die die Stahlkorde in den weiteren Gürtellagen (3b, 3c, 3d) mit der Umfangsrichtung einschließen, jeweils zwischen 10° und 30° betragen, *und wobei zwischen die Randabschnitte der zweiten Gürtellage (3b) und der dritten Gürtellage (3c) ein Gürtelpolster (6) hinein ragt, welcher sich schulterseitig über den Rand der zweiten Gürtellage (3b) hinaus erstreckt,*
**dadurch gekennzeichnet,**
**dass** schulterseitig jeweils zumindest zwei aufeinander liegende Gürtelkantenstreifen (7a, 7b) aus gummiertem und in jedem Streifen (7a, 7b) parallel verlaufenden Stahlkorden angeordnet sind, *wobei der radial innere Streifen (7a) in Kontakt mit dem Randabschnitt der dritten Gürtellage (3c) steht,* welche Streifen (7a, 7b), in axialer Richtung betrachtet, die Kanten der ersten drei Gürtellagen (3a, 3b, 3c) überdecken *und zur Gürtelmitte zu bis knapp zu den Seitenkanten der radial äußersten Gürtellage (3d) reichen,* wobei die Stahlkorde in dem einen Streifen (7a) zu den Stahlkorden in dem anderen Streifen (7b) gekreuzt verlaufen und die Stahlkorde mit der Umfangsrichtung jeweils einen spitzen Winkel einschließen.

2. Fahrzeugluftreifen nach Anspruch 1, **dadurch gekennzeichnet, dass** der Winkel, den die Stahkorde in den beiden Streifen (7a, 7b) mit der Umfangsrichtung einschließen, zwischen 10° und 30° beträgt.

3. Fahrzeugluftreifen nach Anspruch 1, **dadurch gekennzeichnet, dass** die Orientierung der Stahlkorde in den Streifen (7a, 7b), beginnend beim radial inneren Streifen (7a), der Abfolge links-rechts oder rechts-links folgt.

4. Fahrzeugluftreifen nach Anspruch 3, **dadurch gekennzeichnet, dass** die Orientierung der Stahlkorde in den Streifen (7a, 7b) in der einen Schulter mit jener in den Streifen (7a, 7b) in der anderen Schulter übereinstimmt.

5. Fahrzeugluftreifen nach einem der Ansprüche 1 bis 4, **dadurch gekennzeichnet, dass** die Breite der beiden Streifen (7a, 7b) übereinstimmt.

6. Fahrzeugluftreifen nach einem der Ansprüche 1 bis 5, **dadurch gekennzeichnet, dass** die Breite der Streifen (7a, 7b) 5 % bis 20 % der Breite der breitesten Gürtellage (3b) beträgt.

## Claims

1. Pneumatic vehicle tyre of a radial type for trucks, comprising a four-ply belt (3a, 3b, 3c, 3d), wherein each belt ply (3a, 3b, 3c, 3d) contains steel cords as reinforcing elements, which run parallel to one another in each belt ply (3a, 3b, 3c, 3d), wherein the included angle which the steel cords in the first belt ply (3a) form with the circumferential direction is between 50° and 65° and the included angles which the steel cords in the other belt plies (3b, 3c, 3d) form with the circumferential direction are respectively between 10° and 30°, and wherein between the peripheral portions of the second belt ply (3b) and the third belt ply (3c) there protrudes a belt pad (6), which on the shoulder side extends beyond the periphery of the second belt ply (3b), **characterized in that** at least two belt edge strips (7a, 7b), lying one on top of the other and comprising rubberized steel cords running parallel in each strip (7a, 7b), are respectively arranged on the shoulder side, wherein the radially inner strip (7a) is in contact with the peripheral portion of the third belt ply (3c), which strips (7a, 7b), when considered in the axial direction, cover over the edges of the first three belt plies (3a, 3b, 3c) and towards the middle of the belt reach almost up to the side edges of the radially outermost belt ply (3d), wherein the steel cords in one strip (7a) run crosswise in relation to the steel cords in the other strip (7b) and the steel cords respectively form an acute included angle with the circumferential direction.

2. Pneumatic vehicle tyre according to Claim 1, **characterized in that** the included angle that the steel cords in the two strips (7a, 7b) form with the circumferential direction is between 10° and 30°.

3. Pneumatic vehicle tyre according to Claim 1, **characterized in that**, beginning with the radially inner strip (7a), the orientation of the steel cords in the strips (7a, 7b) follows the sequence left-right or right-left.

4. Pneumatic vehicle tyre according to Claim 3, **characterized in that** the orientation of the steel cords in the strips (7a, 7b) in one shoulder coincides with that in the strips (7a, 7b) in the other shoulder.

5. Pneumatic vehicle tyre according to one of Claims 1 to 4, **characterized in that** the width of the two strips (7a, 7b) coincides.

6. Pneumatic vehicle tyre according to one of Claims 1 to 5, **characterized in that** the width of the strips (7a, 7b) is 5% to 20% of the width of the widest belt ply (3b).

## Revendications

1. Pneumatique pour véhicule de construction radiale pour poids-lourds comprenant une nappe d'armature à quatre couches (3a, 3b, 3c, 3d), chaque couche (3a, 3b, 3c, 3d) de la nappe d'armature contenant, en tant que renfort, des câbles d'acier qui s'étendent parallèlement les uns aux autres dans chaque couche (3a, 3b, 3c, 3d) de la nappe d'armature, l'angle formé par les câbles d'acier dans la première couche (3a) de la nappe d'armature avec la direction périphérique étant compris entre 50° et 65° et les angles formés par les câbles d'acier dans les autres couches (3b, 3c, 3d) de la nappe d'armature avec la direction périphérique étant compris à chaque fois entre 10° et 30°, et un rembourrage de nappe d'armature (6) pénétrant entre les portions de bord de la deuxième couche (3b) de la nappe d'armature et de la troisième couche (3c) de la nappe d'armature, lequel rembourrage de nappe d'armature s'étend du côté de l'épaulement au-delà du bord de la deuxième couche (3b) de la nappe d'armature,
**caractérisé en ce que**
à chaque fois au moins deux bandes de bord (7a, 7b) de la nappe d'armature disposées les unes au-dessus des autres, constituées de câbles d'acier caoutchoutés et s'étendant parallèlement dans chaque bande (7a, 7b), sont disposées du côté de l'épaulement, la bande radialement interne (7a) étant en contact avec la portion de bord de la troisième couche (3c) de la nappe d'armature, lesquelles bandes (7a, 7b), considérées dans la direction axiale, recouvrent les arêtes des trois premières couches (3a, 3b, 3c) de la nappe d'armature et s'étendent vers le centre de la nappe d'armature presque jusqu'au niveau des arêtes latérales de la couche (3d) de la nappe d'armature radialement la plus externe, les câbles d'acier s'étendant sous forme croisée dans une bande (7a) par rapport aux câbles d'acier dans l'autre bande (7b) et les câbles d'acier formant avec la direction périphérique à chaque fois un angle aigu.

2. Pneumatique pour véhicule selon la revendication 1, **caractérisé en ce que** l'angle formé par les câbles d'acier dans les deux bandes (7a, 7b) avec la direction périphérique est compris entre 10° et 30°.

3. Pneumatique pour véhicule selon la revendication 1, **caractérisé en ce que** l'orientation des câbles d'acier dans les bandes (7a, 7b), en commençant au niveau de la bande radialement interne (7a), suit une séquence gauche-droite ou droite-gauche.

4. Pneumatique pour véhicule selon la revendication 3, **caractérisé en ce que** l'orientation des câbles d'acier dans les bandes (7a, 7b) dans l'un des épaulements coïncide avec celle dans les bandes (7a, 7b) dans l'autre épaulement.

5. Pneumatique pour véhicule selon l'une quelconque des revendications 1 à 4, **caractérisé en ce que** les largeurs des deux bandes (7a, 7b) coïncident.

6. Pneumatique pour véhicule selon l'une quelconque des revendications 1 à 5, **caractérisé en ce que** la largeur des bandes (7a, 7b) représente 5 % à 20 % de la largeur de la couche (3b) la plus large de la nappe d'armature.
